Europäisches Patentamt

European Patent Office

Office européen des brevets

(19)

(11) Publication number: **0 090 926**

**A1**

(12) **EUROPEAN PATENT APPLICATION**

(21) Application number: **83101240.6**

(22) Date of filing: **09.02.83**

(51) Int. Cl.³: **C 01 B 6/04**
**C 08 F 10/00, C 08 F 4/60**

(30) Priority: **26.03.82 US 362183**

(43) Date of publication of application:
**12.10.83 Bulletin 83/41**

(84) Designated Contracting States:
**BE DE FR GB NL**

(71) Applicant: **CONOCO INC.**
**1000 South Pine Street P.O. Box 1267**
**Ponca City Oklahoma 74601(US)**

(72) Inventor: **Shannon, Mark Lawrence**
**2008 N. 7th Street**
**Ponca City OK 74601(US)**

(74) Representative: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr. rer.**
**nat. G. Bezold Maximilianstrasse 58**
**D-8000 München 22(DE)**

(54) **A soluble magnesium hydride reagent.**

(57) Magnesium hydride reagent soluble in certain organic solvents such as tetrahydrofuran is prepared by reacting under anhydrous conditions a mixture consisting of

1) magnesium metal and an equimolar or greater amount of magnesium halide.
2) a catalyst mixture consisting of
   a) a transition metal halide,
   b) a condensed polycyclic aromatic hydrocarbon, and
   c) an organometallic compound, organometallic halide compound or metal hydride compound or mixtures of these;
2) in an ethereal solvent
4) while under a dry atmosphere comprising hydrogen, or hydrogen in an inert gas.

DR. S.......... · JAXOO · DR. BEZOLD MELTE'1
HILGERS · DR. MEYER · PLATH

0090926

ICR 6887

A SOLUBLE MAGNESIUM HYDRIDE REAGENT

This invention relates to a magnesium hydride reagent soluble in certain organic compounds. More specifically, this invention relates to a simple process for producing a solid magnesium hydride reagent which can be solubilized in solvents such as tetrahydrofuran.

Magnesium hydride was first prepared in 1912 by the pyrolysis of ethylmagnesium iodide and in 1950 by the pyrolysis of dialkylmagnesium compounds. However, the yields were low and the quality of the hydride was poor. Magnesium hydride of about 60% purity has been prepared by Weiberg et al Z. Naturforsch, 6B 394 (951) by the direct hydrogenation of metallic magnesium. This reaction requires a high pressure of hydrogen of about 200 atmospheres, a high temperature of about 570°C and a magnesium iodide catalyst. Other methods obtained magnesium hydride of about 75% purity by treating diethylmagnesium with lithium aluminum hydride. Presently, yields of reactive magnesium hydride are obtained by heating magnesium with iodine at 380°C to 450°C with an initial hydrogen pressure of 100 to 200 kilograms per centimeter along with continuous grinding in a ball mill as described in the Russian Journal of Inorganic Chemistry, Volume 6, page 392 (1961). In the Handbook of Organometallic Compounds, 46, 1968, it is reported that magnesium hydride is obtained from the hydrogenation of diethylmagnesium at elevated temperatures. Diethylmagnesium is an expensive reagent and it would be an advantage to provide an active soluble magnesium hydride in a commercially feasible process for producing such materials.

Reducing agents play an important role in synthetic chemistry. Of the reducing agents known, the metal hydride compounds have reached a high level of utility. Magnesium derivatives, for example, have many desirable properties, such as being readily controlled, usually easy to prepare and handle.  Unfortunately, magnesium hydride is virtually insoluble in such common solvents as diethyl ether, tetrahydrofuran, and hexane and reacts with solvents such as acetone, methylethyl ketone, ethanol and water.  Such insolubility leads to problems in the control and yield obtainable in many desirable reactions such as in the production of polymerization catalysts.

The hydridomagnesium halides are soluble magnesium reagents, in contrast to magnesium hydride.  However, unlike magnesium hydride, hydridomagnesium halide preparations are tedious, lengthy or give poor reagents.  For example, Ashby et al, in the Journal of the American Chemical Society, Volume 99, page 310 to 311 (1977) and Inorganic Chemistry, Volume 16, pages 2941 through 2944 (1977) have prepared hydridomagnesium chloride in tetrahydrofuran by exchange with magnesium hydride and magnesium chloride.  However, the magnesium hydride was prepared by a lengthy synthesis. The current commercial and standard methods give insufficiently reactive magnesium hydride for this purpose.

Magnesium hydrides have also been prepared by as described in Czech. Socialist Republic Patent 139589 and in Angen. Chem. Int. Ed. Eng., 19, page 818-819, 1980.  It is also known in the art to produce what is termed a "solventless" Grignard, which is produced by reacting magnesium metal with an organic halide in the presence of a solvent which is designated as a non-solvating solvent i.e. an inert or non-complexing diluent (such as a hydrocarbon) as distinguished from an ether.

Therefore it would be of great advantage to produce a magnesium hydride reagent which is soluble in common solvents, does not require a lengthy  or expensive preparation and which would allow the use of magnesium hydride in commercial reactions such as the preparation of catalysts for olefin polymerizations.

It is therefore an object of the present invention to prepare a magnesium hydride reagent soluble in common solvents and which is useful in the preparation of olefin polymerization catalysts.  Other objects will become apparent to those skilled in this art as the description proceeds.

It has now been discovered that a soluble magnesium hydride reagent can be prepared in a convenient fashion by reacting under suitable anhydrous conditions of temperature and pressure a mixture consisting of

      1)    magnesium metal and an equimolar or excess amount of magnesium halide,

      2)    a catalyst mixture consisting of

           a)    a transition metal halide,

           b)    a condensed polycyclic aromatic hydrocarbon, and

           c)    an organometallic compound, organometallic halide compound, or metal hydride compound, 1) and 2) reacted in

      3)    an ethereal solvent under a hydrogen atmosphere or an atmosphere comprising an inert gas containing hydrogen

Hydrides of the type $MH_n$ wherein n is the valence of the metal are taught in U.S. Patent 3,617,218.  These materials are binary hydrides which are insoluble and do not contain halides.  Another method is taught in U.S. Patent 4,217,246 but produces a material which does not contain any halides in the product and requires substantial quantities of an aromatic compound.  The process is taught in The Journal of the American Chemical Society, 99-1 page 310, (1977), wherein magnesium hydride was prepared using a lithium aluminum hydride preparation route.  This method produces a product containing aluminum.  The hydridomagnesium chloride and hydridomagnesium bromide material as reported in this reference are both soluble and stable in tetrahydrofuran.

U.S. Patent 4,217,246 hydrogenates aromatic substrates using a quaternary system comprising an elemental metal of the 2A group, a transition metal halide and an organometallic activator in the presence of a hydrogen atmosphere.  However, this reference contains aromatic substituents and does not reveal the presence of halides in the substrate.

The method of the present invention is a concise, economical and easily carried out method for obtaining a magnesium hydride reagent which is soluble in coordination solvents such as tetrahydrofuran.

In carrying out the method of the present invention, the first step is mixing magnesium metal and an equimolar or excess amount of magnesium halide. These materials should be anhydrous and handled under a dry argon nitrogen or hydrogen atmosphere to prevent moisture or oxygen uptake. Normally these materials are ground together in a ball mill, screw pulverizer or other milling equipment to obtain a product which passes a finer mesh size than 150 based on U.S. standard sieve series. It is desirable to obtain a magnesium powder of high surface area and small particle size. Of the magnesium halides magnesium chloride is the preferred material.

The catalyst mixture of the present invention is comprised of a transition metal chloride, a condensed polycyclic aromatic hydrocarbon and an organometallic compound or organometallic halide or metal hydride compound.

Of the transition metal halides, transition metal chlorides are the preferred materials. These transition metal chlorides are compounds of chlorine with a metal taken from the groups 4b, 5b, 6b, 7b, and 8 of the Periodic Table of the Elements. Representative but non-exhaustive examples of such compounds are titanium (III) chloride titanium (III) chloride/aluminum trichloride solid solution, titanium (IV) chloride, chromium (III) chloride, iron (II) chloride, iron (III) chloride and cobalt (II) chloride. These materials should be used as their anhydrate form for maximum yield.

Condensed polycyclic aromatic hydrocarbons useful in the practice of the present invention are those compounds of carbon and hydrogen consisting of fused aromatic rings. Representative but non-exhaustive examples of such materials are naphthalene, anthracene, phenanthracene, fluorine, pyrine and fluoranthene.

The organometallic compound, organometallic compounds or metal hydride compounds of the present invention are from 1 to 10 carbon atom alkyl, aryl, or hydrogen substitued derivatives of the Group 1a, 2a, 3a, or 2b metal and boron. Of these the butyl derivatives are especially preferred. Representative but non-exhaustive examples of such materials are tertiary butyl lithium, n-butyl ethyl magnesium, triethyl aluminum, Grignard reagents such as ethyl magnesium chloride, diethyl aluminum chloride, diisobutylaluminum hydride, magnesium hydride, lithium aluminum hydride and lithium triethylborohydride.

When preparing the catalyst mixture of the present invention, each component of the catalyst is used within a range of about .1 mole per mole of magnesium metal to about 0.005 mole per mole of magnesium metal.

Ethereal solvents useful in the practice of the present invention should be sparged with hydrogen gas or an inert gas such as nitrogen or argon and thoroughly dried prior to use. Hydrogen is a preferred sparge gas. Representative but non-exhaustive examples of such ethereal solvents are diethylether, tetrahydrofuran, dioxane, diisoamylether, ethylene glycol dimethyl ether, diethylene glycol trimethylether, triethyleneglycol dimethylether, and mixtures and analogues of these.

The reaction should be carried out in a hydrogen atmosphere. The hydrogen atmosphere is critically a dry atmosphere from which any substantial amounts of moisture and oxygen have been removed. Preferably but not critically carbon dioxide and carbon monoxide should also be removed for maximum yield. If desired, hydrogen can be admixed with an inert gas such as argon, nitrogen, xenon, helium and neon during the reaction.

The preparation should be carried out at a temperature of from about 0°C to about 120°C. However, temperatures of from about 20°C to about 80°C are most preferred, and the reaction is entirely effective at ambient temperatures.

The reaction is normally carried out at a pressure of from about 2 to about 80 atmospheres. However, atmospheric of from about 5 to about 20 are more preferred and pressures of from about 7 to about 12 atmospheres are most preferred.

The stable magnesium hydride reagent obtained from the process of the present invention is soluble in coordination solvents. Representative but non-exhaustive examples of such solvents are tetrahydrofuran and tertiary amine solvents such as triethyl amine and N-methyl piperidine, linear or cyclic sulfides such as dimethyl sulfide and tetrahydrothiophene, and linear ethers such as 1,2-dimethoxyethane (glyme), bis(2-methoxyethyl)ether (diglyme), thiophene, furan, bi(thiophene), di(isoamyl) ether, di(isooctyl) ether, di(octyl)ether, crown ethers and cryptates. The stable materials of the present invention can be recovered, dried, and remain storage stable for several weeks. However, these materials remain active for a shorter length of time if left in solution as prepared. The reagents are most effective immediately after preparation.

The magnesium hydride reagent of the present invention is useful in the reduction of transition metal halides in order to obtain operable olefin polymerization catalysts. Thus in one aspect of the present invention the transition metal catalyst component is prepared by the insitu reduction of transition metal tetrahalides with magnesium hydride reagent of the present invention in order to produce an effective olefin polymerization catalyst.

The invention is more concretely described with reference to the examples below wherein all parts and percentages are by weight unless otherwise specified. The examples are designed to illustrate the instant invention and not to limit it.

Example 1

A soluble magnesium hydride reagent was prepared by charging an oven-dried 100 milliliter (ml) stainless steel autoclave with 0.6193 grams (g) magnesium metal (25.47 millimoles), 2.5214 g magnesium chloride (26.48 mmole) and 0.0236 g magnesium hydride (0.896 mmole). These materials were slurried in 30 ml of dried tetrahydrofuran and about 0.02 grams of napthalene and $TiCl_3.(AlCl_3)$ (0.02g) added to give a bright violet slurry.

The autoclave was closed, flushed 5 times with 100 pounds per square inch gauge (psig) hydrogen and pressurized to 150 psig with hydrogen gas. The autoclave contents were stirred at ambient temperature about 22°C, repressurizing as needed until no further hydrogen uptake occurred. A purple solution resulted which was filtered. The solvent was removed by evaporation to give a purple black sticky solid mass.

### Example 2

The procedure used in Example 1 was carried out utilizing a mixture of 1.9778 grams (20.7735 mmole) magnesium chloride, 0.5209 grams (21.434 mmole) magnesium metal, 0.1549 grams (5.8857 mmole) magnesium hydride, 0.1159 grams (0.6503 mmole) anthracene, and 0.4032 mmole titanium trichloride (hydrogen reduced). These materials were hydrogenated, with the initial hydrogen pressure at 160 psig. After filtration a purple/black tetrahydrofuran solution gave a positive test for reducing activity. The yield based on 0.3173 grams magnesium metal recovered was 69%.

### Example 3

An olefin polymerization catalyst was made from the soluble magnesium hydride reagent prepared in Example 1 and tested for activity. The purple/black solid obtained from Example 1 was slurried in 150 ml of dry hexane. The large excess of titanium tetrahalide was added to the slurry over a period of 1 1/2 hours at ambient temperature. A green slurry resulted which was filtered and the solid precipitate was washed with hexane, dried under vacuum and a yellow titanium tetrachloride.2 THF azeotrope was removed by sublimation (5 microns 40-50°C) to yield a solid gray-green powder as catalyst. The powder was analyzed to reveal it contained 13.8 weight percent titanium, 7.15 weight percent magnesium. The molar ratio of titanium to magnesium was 1.00 to /1.02.

The solid catalyst was slurried in hexane, a concentration of 1.2252 mg titanium per ml of slurry. Two polymerizations of 1-butene were carried out in liquid monomer using 0.82 ml of this slurry (1.000 mg titanium) 2.087 mmole of triethylaluminum and 5 psig hydrogen pressure. After 2 hours 7.05 kilograms of polybutene per gram of titanium was realized at a polymerization temperature of 60°C. In the other polymerization 5.14 kilograms of polybutene per gram of titanium were obtained at 70°C.

The slurry obtained was tested in the polymerization of ethylene. Using 0.253 ml of slurry and 1.2 mmole of triethylaluminum were used in hexane solvent in four polymerizations. The polymerizations were carried out as described in Table 1, where DEAC in diethylaluminum chloride and TEA is triethylaluminum. Polymerization conditions were 85°C, 120 pounds per square inch gauge (psig) total pressure, 700 milliliters (ml) hexane for 1 hour at an aluminum/titanium ratio of 180/1 respectively.

0090926

## Table 1

### Polymerizations of Ethylene

| H$_2$ Pressure (PSIG) | Co-Monomer | Co-Catalyst | Resin Density | MI$_2$ | Activities (Kg PE/g Ti/hr) |
|---|---|---|---|---|---|
| 45 | | TEA | .9639 | 1.17 | 256.89 |
| 45 | 1-Butene 22 ml | " | .9592 | 1.75 | 231.32 |
| 45 | 1-Butene 57 ml | " | .9464 | .361 | 347.35 |
| 45 | 1-Butene 9 ml | DEAC | .9512 | .0138 | 45.10 |

While certain embodiments and details have been shown for the purpose of illustrating this invention, it will be apparent to those skilled in this art that various changes and modifications may be made herein without departing from the spirit or scope of the invention.

I claim:

1.    A method for preparing a stable magnesium hydride reagent soluble in coordination solvents, comprising reacting in an ethereal solvent under a substantially water-free hydrogen atmosphere, a mixture comprising

a)    magnesium metal and at least a equimolar amount of magnesium halide, with

b)    a mixture containing

1)    a transition metal halide,

2)    a condensed polycyclic aromatic hydrocarbon

3)    an organometallic, organometallic halide, metal hydride or a combination of these.

2.    A method as described in claim 1 wherein the reagent is soluble in a solvent selected from the group consisting of tetrahydrofuran.

3.    A method as described in claim 2 wherein the atmosphere under which the reaction is carried out is hydrogen in an inert gas selected from the group consisting of argon, xenon, helium, neon and nitrogen.

4.    A method as described in claim 3 wherein the reaction is carried out at a temperature of from about 0°C to about 120°C.

5.    A method as described in claim 4 wherein the reaction is carried out at a pressure of from about 2 to about 80 atmospheres.

6.    A method as described in claim 5 wherein the magnesium halide is a magnesium chloride compound.

7.    A method as described in claim 6 wherein the transition metal halide of (1) is selected from the group consisting of titanium trichloride, titanium trichloride/ aluminum trichloride, titanium tetrachloride, chromium trichloric iron dichloride, iron trichloride and cobalt dichloride.

8. A method as described in claim 5 wherein the condensed polycyclic aromatic hydrocarbon of (2) is selected from the group consisting of compounds containing carbon and hydrogen in fused aromatic rings.

9. A method as described in claim 8 wherein the polycyclic aromatic hydrocarbon is selected from the group consisting of naphthalene, anthracene, phenanthrene, fluorene, pyrene and fluoranthene.

10. A method as described in claim 9 wherein the organometallic compound, organometallic halide compound or metal hydride of (3) is selected from the group consisting of t-butyl lithium, n-butyl ethyl magnesium triethylaluminum, ethylmagnesium chloride, diethylaluminum chloride, diisobutylaluminum hydride, magnesium hydride, lithium aluminum hydride, and lithium triethylborohydride.

11. A method as described in claim 10 wherein each component in the catalyst mixture is used within a range of about .2 mole per mole of $Mg°$ to .005 moles per mole of $Mg°$.

12. A method as described in claim 11 wherein the ethereal solvent is selected from the group consisting of diethylether, tetrahydrofuran, dioxane, diisoamylether, 1,2-dimethoxyethylene (glyme) and bis(2-methoxyethyl) ether (diglyme).

13. A tetrahydrofuran soluble magnesium hydride reagent prepared by a process comprising reacting in an ethereal solvent and under a substantially water-free hydrogen atmosphere a mixture comprising

    a)    magnesium metal and at least a equimolar amount of magnesium chloride, and

    b)    a mixture containing

        1)    titanium tetrachloride

        2)    a condensed polycyclic aromatic hydrocarbon,

        3)    an organometallic, organometallic halide, organometallic hydride or a combination of these.

14. A reagent as described in claim 13 wherein the polycyclic aromatic hydrocarbon is selected from the group consisting of naphthalene. anthracene, phenanthrene, fluorene, pyrene and fluoranthene.

15. A reagent as described in claim 14 wherein the organometallic compound of (3) are selected from the group consisting of t-butyl lithium, n-butyl ethyl magnesium, triethylaluminum, ethylmagnesium chloride, diethylaluminum chloride, diisobutylaluminum hydride, magnesium hydride, lithium aluminum hydride, and lithium triethylborohydride.

16. A method for preparing an olefin polymerization catalyst comprising reacting in an ethereal solvent under a substantially water-free hydrogen atmosphere
   a)  magnesium metal and at least a equimolar amount of magnesium halide, with
   b)  a mixture containing
       1)  a transition metal halide,
       2)  a condensed polycyclic aromatic hydrocarbon,
       3)  an organometallic, organometallic halide, metal hydride or a combination of these, then
   c)  further reacting the material obtained from (b) with a large excess of titanium tetrachloride to form a slurry and recovering solids therefrom as an olefin polymerization catalyst.

17. A method as described in claim 16 wherein the addition of titanium tetrachloride is made at ambient temperature

18. A method as described in claim 17 wherein the resulting slurry is recovered, washed with hydrocarbon solvent, dried under vacuum and the resultant titanium tetrachloride/tetrahydrofuran azeotrope is removed to yield the polymerization catalyst.

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | DE-C- 862 004 (D.E. WIBERG)<br><br>* Claim *<br><br>--- | 1,3,6,<br>7 | C 01 B 6/04<br>C 08 F 10/00<br>C 08 F 4/60 |
| Y | GB-A- 813 796 (BASF)<br><br>* Claims 1,8,9; page 1, lines 37-42 *<br><br>--- | 1,7-10<br>,13-17 | |
| Y | US-A-3 478 008 (H.D. LEDBETTER)<br>* Claim 1; column 2, lines 25-33; column 5, table I, example 5 *<br><br>--- | 16 | |
| Y | GB-A- 829 127 (PHILLIPS PETROLEUM)<br>* Claims 1,3,5,9 *<br><br>--- | 16 | |
| A,D | US-A-3 617 218 (E.E. VAN TAMELEN)<br>* Claims 1,3; column 2, line 42 - column 4, line 5 *<br><br>----- | 1,13 | TECHNICAL FIELDS SEARCHED (Int. Cl. ³)<br><br>C 01 B 6<br>C 08 F |

The present search report has been drawn up for all claims

| Place of search | Date of completion of the search | Examiner |
|---|---|---|
| THE HAGUE | 14-07-1983 | WEBER H. |